# FASCICULE DE BREVET EUROPEEN

(11) **EP 2 681 588 B1**
(45) Date de publication et mention de la délivrance du brevet: **24.06.2015**
(21) Numéro de dépôt: 12706256.0
(22) Date de dépôt: 29.02.2012
(51) Int. Cl.: G01T 1/29, G01T 1/24, G01T 7/00, H05K 7/02

(54) **DETECTEUR DE SURSAUTS GAMMA COMPACT A HAUTE RESOLUTION**
KOMPAKTER UND HOCHAUFLÖSENDER GAMMA-BURST-DETEKTOR
HIGH-RESOLUTION COMPACT GAMMA BURST DETECTOR

(30) Priorité: 01.03.2011 FR 1151654
(43) Date de publication de la demande: 08.01.2014
(73) Titulaire: SAGEM DEFENSE SECURITE, 92100 Boulogne Billancourt (FR)
(72) Inventeur: DEZORD, Jean-Bernard, F-75015 Paris (FR); RAOU, Michel, F-75015 Paris (FR)
(74) Mandataire: Lavialle, Bruno François Stéphane
(86) Numéro de dépôt international: PCT/EP2012/053410
(87) Numéro de publication internationale: WO 2012/117010

(56) Documents cités:
- US-A1- 2001 035 497
- US-A1- 2010 059 846
- US-B1- 6 236 051
- US-B1- 6 359 281

## Description

L'invention concerne un détecteur de photons X et de rayonnement gamma et plus particulièrement l'agencement d'un tel détecteur.

### ARRIERE-PLAN DE L'INVENTION

La compréhension de l'univers passe par l'observation des corps célestes et des réactions physico-chimiques qui s'y produisent. Afin d'observer ceux-ci, on utilise des détecteurs de rayonnements X et gamma qui permettent de localiser les sources de ces rayonnements et les corps stellaires les plus massifs qui en sont les principaux émetteurs.

La détection des rayonnements gamma est réalisée par des détecteurs placés sur des satellites pour permettre d'échapper aux distorsions et altérations des rayonnements provoquées par l'atmosphère terrestre.

De tels détecteurs comportent des capteurs susceptibles d'interagir avec des photons gamma et une unité de traitement des données issues de ces capteurs. Pour limiter les interférences dues aux fils de connexion, il est connu de relier directement l'unité de traitement aux capteurs en intégrant l'unité de traitement directement sur les capteurs. Toutefois, cette solution est complexe à mettre en oeuvre et ne permet pas de séparer la fabrication de ces deux composants, tous deux complexes.

Il est également connu, afin de faciliter la fabrication des composants, de les relier par une liaison électrique filaire. L'inconvénient de cette solution est que les liaisons filaires introduisent des interférences entre les capteurs et l'unité de traitement. Des détecteurs sont présentés par les documents US 6,236,051 et US2010/059846.

### OBJET DE L'INVENTION

L'objet de l'invention est de remédier à ces inconvénients en proposant un détecteur compact de rayonnement X et gamma, minimisant les interférences et de l'unité de traitement indépendamment les uns des autres.

### BREVE DESCRIPTION DE L'INVENTION

L'invention concerne un détecteur plan d'un imageur de sursaut gamma, comprenant un circuit multicouche d'interconnexion entre des connecteurs externes et un circuit de traitement fixés sur une face arrière du circuit et un module de détection fixé sur une face avant du circuit, le module de détection comportant un support ayant une face arrière fixée au circuit et une face avant sur laquelle sont fixés des capteurs, et un dispositif de connexion électrique haute tension comportant une partie traversant le support et s'étendant entre deux capteurs adjacents pour relier une plage de connexion du circuit à une grille conductrice qui s'étend au moins en partie entre les capteurs et qui est reliée électriquement à une face libre de chaque capteur.

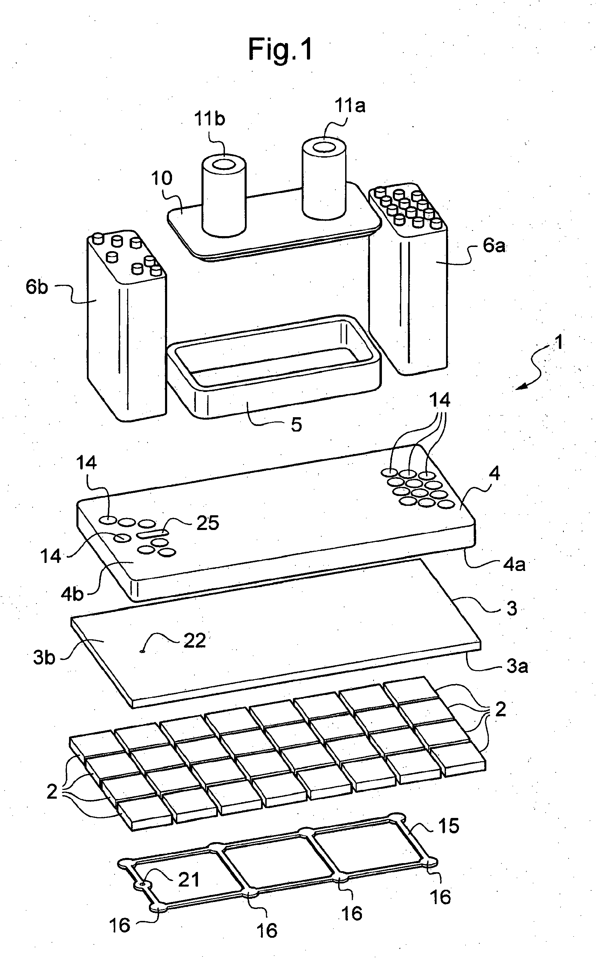

L'utilisation d'une grille conductrice et d'un dispositif de connexion traversant le support des capteurs permet d'obtenir un module de détection particulièrement compact. L'expression « grille conductrice qui s'étend au moins en partie entre les capteurs » couvre tous les cas où la grille s'étend en vis-à-vis d'un espace inter capteurs situé entre deux capteurs adjacents et cela même si la grille ne s'étend pas exclusivement à l'intérieur de l'espace inter capteurs, comme c'est le cas du mode de réalisation illustré aux figures 1 à 3. Ainsi, le dispositif de connexion ne vient pas masquer les capteurs ni encombrer les côtés du détecteur. Il devient aisé d'assembler les détecteurs côte à côte pour produire une caméra avec une haute résolution et de faibles zones mortes.

En outre, les capteurs restent séparés du circuit de traitement ce qui permet une production plus aisée et donc moins coûteuse des composants.

La compacité du détecteur peut être encore améliorée lorsque la grille comprend des plots de connexion agencés pour recouvrir un coin de quatre capteurs adjacents.

Ainsi, la grille s'étend sur une surface minimale, permettant de dégager une surface maximale de captage des rayonnements.

### BREVE DESCRIPTION DES DESSINS

D'autres caractéristiques et avantages de l'invention apparaîtront à la lecture de la description qui suit d'un mode de réalisation particulier non limitatif de l'invention.

Il sera fait référence aux dessins annexés, parmi lesquels :
- les figures 1 et 2 illustrent respectivement une vue éclatée et une vue assemblée d'un détecteur selon l'invention ;
- la figure 3 illustre un dispositif de connexion .électrique utilisé dans un mode préféré de l'invention.

### DESCRIPTION DETAILLEE DE L'INVENTION

Le détecteur de l'invention est destiné à être installé dans un satellite de détection des rayonnements X et gamma qui comporte une caméra pointée vers les sources potentielles de rayonnement.

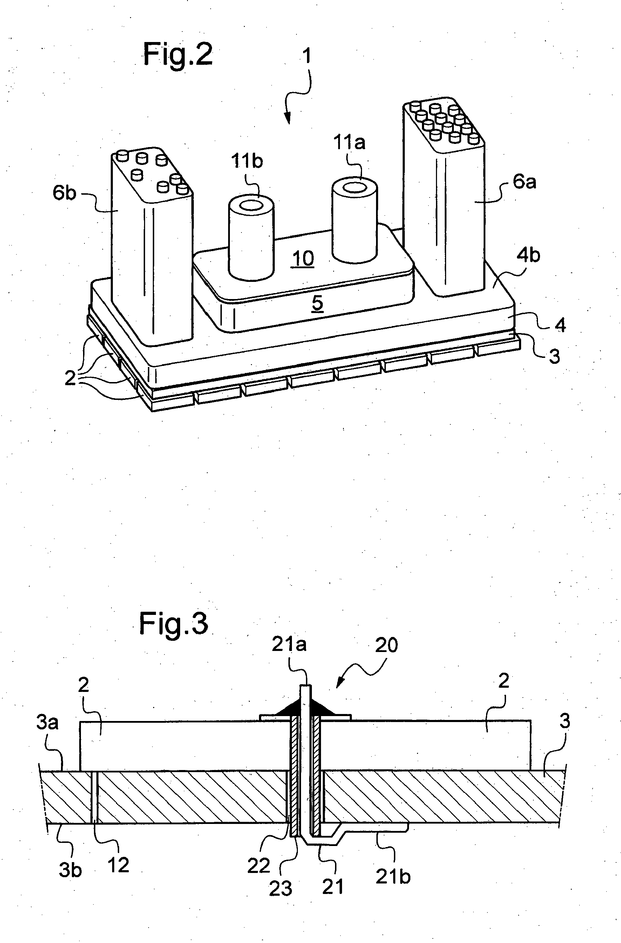

Une telle caméra est composée d'une pluralité de détecteurs élémentaires 1, tels qu'illustrés en figures 1 et 2, qui sont adjacents les uns aux autres afin de constituer une surface de détection.

Chaque détecteur 1 comporte lui-même une pluralité de capteurs 2 disposés côte à côte pour former une surface élémentaire de détection. Les capteurs 2 sont disposés en une plaque de quatre capteurs par huit capteurs (soit trente-deux capteurs par détecteur) et sont collés sur la face avant 3a d'un support rigide 3 électriquement isolant. Les capteurs 2 sont ainsi agencés pour présenter une face libre sensible aux rayonnements. Le support 3 est percé d'une pluralité de pistes de connexion électriques 12 correspondant chacune à un capteur 2 et débouchant sur la face arrière 3b du support 3.

La face arrière 3b du support 3 est collée sur une face avant 4a d'un circuit multicouche 4 en céramique cofrittée qui permet la connexion électrique entre le module de détection et un circuit de traitement 5 et des connecteurs externes 6a et 6b connectés par contact sur une face arrière 4b dudit circuit multicouche 4.

Le circuit de traitement 5 est contenu dans une enceinte fermée par un couvercle 10 comprenant deux pattes de fixation 11a et 11b.

Chaque capteur 2 est ainsi relié électriquement au circuit de traitement 5 via les pistes de connexion 12 du support 3 puis via le circuit électrique multicouche 4.

Le circuit multicouche 4 comporte sur ses faces avant 4a et arrière 4b des points de connexion électriques 14 destinés à relier électriquement le circuit de traitement 5 aux connecteurs externes 6a, 6b (eux-mêmes reliés à un module de transmission des données) et aux capteurs 2.

La structure multicouche du circuit 4 permet en effet de rassembler les différentes connexions entre les composants en un circuit compact. Le circuit de traitement 5 est séparé physiquement des capteurs 2, ce qui permet de produire et de contrôler qualitativement chacun des composants séparément. En outre, le circuit de traitement 5 et les capteurs 2 ne sont séparés que par le support 3 et le circuit multicouche 4, ce qui limite fortement la possibilité d'interférence dans la transmission des informations.

Les capteurs 2 sont disposés pour former une plaque la plus compacte possible afin d'optimiser la résolution. En effet, le jeu entre chaque capteur 2 constitue une zone morte du détecteur ce qui diminue la résolution du détecteur 1 tout en augmentant la surface occupée par le détecteur 1.

Il est donc essentiel de minimiser le jeu entre chaque capteur 2.

Pour capter les rayonnements, la face libre des capteurs 2 doit être polarisée à haute tension (potentiel compris entre -400 et -800 V). Pour appliquer ce potentiel, le détecteur 1 comporte une grille conductrice 15 qui s'étend entre les capteurs 2 et qui comporte huit plots 16 conducteurs dont chacun est agencé pour couvrir le coin de quatre capteurs 2 adjacents.

La grille 15 est alimentée électriquement par un dispositif de connexion électrique 20 qui traverse le support 3 des capteurs 2 pour connecter électriquement la grille 15 et le connecteur externe via le circuit céramique multicouche d'interconnexion 4.

La grille conductrice 15 est réalisée dans un alliage à faible dilatation thermique tel qu'un alliage de type KOVAR (FeNi29Co18). En effet, les capteurs 2 sont de préférence réalisés dans un cristal de tellure de cadmium, cristal présentant un faible coefficient de dilatation. La grille 15, fixée sur les capteurs 2, doit donc présenter un coefficient de dilatation thermique comparable à celui des capteurs 2 pour éviter tout mouvement relatif entre les deux composants. Les alliages de type Kovar sont donc indiqués pour ce mode de réalisation de l'invention.

Le détail du dispositif de connexion 20 est illustré en figure 4. Celui-ci comprend un fil d'aluminium 21 électriquement conducteur ayant une première portion d'extrémité 21a reliée à la grille 15 et une deuxième portion d'extrémité. 21b collée sur une face arrière 3b du support 3. Le fil 21 a une portion centrale reçue dans un trou de passage 22 ménagé entre les faces avant et arrière du support 3 pour déboucher entre deux capteurs 2 adjacents en regard de la grille 15. En outre, le fil 21 est recouvert d'une gaine isolante 23 disposée entre la première 21a et la deuxième portion d'extrémité 21b afin de l'isoler électriquement du support 3 et des capteurs 2.

Ainsi, l'alimentation électrique de la grille 15 et des capteurs 2 chemine par l'intérieur du support 3, ce qui limite la surface occupée par la grille et permet d'accoler deux détecteurs 1 sans augmenter le jeu entre deux capteurs 2 adjacents pour laisser passer un fil conducteur 21.

On remarque un point de connexion oblong 25 destiné à connecter le fil conducteur 21 à la haute tension via le circuit céramique 4.

Les composants sont collés entre eux par une colle époxy et argent qui permet, outre la fixation des pièces, une conduction électrique.

Bien entendu, l'invention n'est pas limitée au mode de réalisation décrit, mais englobe toutes les variantes possibles dans la limite de la portée des revendications.

La colle peut être remplacée par différents moyens d'assemblage tels le brasage, le soudage ou un assemblage mécanique.

Le fil conducteur est réalisé en aluminium. Toutefois, d'autres matériaux conducteurs tels le cuivre, l'acier ou l'or peuvent être également utilisés.

D'autres alliages que celui mentionnés peuvent être utilisés et par exemple un alliage de type INVAR.

## Revendications

1. Détecteur (1) plan d'un imageur de sursaut gamma, comprenant un circuit multicouche (4) d'interconnexion entre des connecteurs externes (6a, 6b) et un circuit de traitement (5) fixés sur une face arrière (4b) du circuit (4) et un module de détection fixé sur une face avant (4a) du circuit (4), le module de détection comportant un support (3) ayant une face arrière (3b) fixée au circuit (4) et une face avant (3a) sur laquelle sont fixés des capteurs (2), et un dispositif de connexion électrique (20) haute tension comportant une partie traversant le support (3), **caractérisé en ce que** le dispositif de connexion électrique (20) s'étend entre deux capteurs (2) adjacents de telle sorte à relier une plage de connexion du circuit à une grille conductrice (15) qui s'étend au moins en partie entre les capteurs (2) et qui est reliée électriquement à une face libre de chaque capteur (2).

2. Détecteur selon la revendication 1, dans lequel la partie traversante du dispositif de connexion électrique (20) comporte un fil conducteur (21) ayant entre deux portions d'extrémité nues (21a, 21b) une portion centrale recouverte d'une gaine isolante 23) pour l'isoler électriquement du support (3).

3. Détecteur selon la revendication 2 dans lequel le fil conducteur (21) est en aluminium

4. Détecteur selon l'une des revendications 1 à 3, dans lequel la grille (15) comprend des plots de connexion (16) agencés pour recouvrir un coin de quatre capteurs (2) adjacents.

5. Détecteur selon l'une des revendications 1 à 3, dans lequel la tension appliquée aux capteurs (2) est comprise entre -400 et -800 V.

6. Détecteur selon l'une des revendications 1 à 5, dans lequel les composants sont assemblés par collage.

7. Détecteur selon la revendication 6, dans lequel la colle utilisée est du type époxy et argent.

8. Détecteur selon l'une des revendications 1 à 7, dans lequel les capteurs (2) sont réalisés en tellure de cadmium.

9. Détecteur selon l'une des revendications 1 à 8, dans lequel la grille conductrice (15) est réalisée en un alliage FeNi29Co18.

## Patentansprüche

1. Flachdetektor (1) für einen Gammablitz-Bildaufnehmer, umfassend eine mehrschichtige Leiterplatte (4) zur Verbindung von externen Verbindern (6a, 6b) und einer Verarbeitungsschaltung (5), die auf einer Rückseite (4b) der Leiterplatte (4) befestigt sind, mit einem Detektionsmodul, das auf einer Vorderseite (4a) der Leiterplatte (4) befestigt ist, wobei das Detektionsmodul einen Träger (3) umfasst, der eine Rückseite (3b) hat, die an der Leiterplatte (4) befestigt ist, sowie eine Vorderseite (3a), an der Sensoren (2) befestigt sind, sowie eine elektrische Hochspannungs-Verbindungsvorrichtung (20), die einen den Träger (3) durchsetzenden Abschnitt hat, **dadurch gekennzeichnet, dass** sich die elektrische Verbindungsvorrichtung (20) derart zwischen zwei angrenzenden Sensoren (2) erstreckt, dass ein Verbindungsbereich der Leiterplatte mit einem leitenden Gitter (15) verbunden wird, das sich zumindest teilweise zwischen den Sensoren (2) erstreckt und das elektrisch mit einer freien Fläche jedes Sensors (2) verbunden ist.

2. Detektor nach Anspruch 1, wobei der durchsetzende Abschnitt der elektrischen Verbindungsvorrichtung (20) einen leitenden Draht (21) umfasst, der zwischen zwei blanken Endabschnitten (21a, 21b) einen zentralen Abschnitt hat, der von einer isolierenden Umhüllung (23) überzogen ist, um ihn von dem Träger (3) elektrisch zu isolieren.

3. Detektor nach Anspruch 2, wobei der leitende Draht (21) aus Aluminium ist.

4. Detektor nach einem der Ansprüche 1 bis 3, wobei das Gitter (15) Verbindungskontaktstellen (16) umfasst, die derart ausgebildet sind, dass sie eine Ecke von vier angrenzenden Sensoren (2) abdecken.

5. Detektor nach einem der Ansprüche 1 bis 3, wobei die an den Sensoren (2) angelegte Spannung zwischen -400 und -800 V beträgt.

6. Detektor nach einem der Ansprüche 1 bis 5, wobei die Bestandteile durch Kleben zusammengefügt sind.

7. Detektor nach Anspruch 6, wobei der verwendete Klebstoff nach Art eines Epoxidklebers und Silberklebers ist.

8. Detektor nach einem der Ansprüche 1 bis 7, wobei die Sensoren (2) aus Cadmiumtellurid sind.

9. Detektor nach einem der Ansprüche 1 bis 8, wobei das leitende Gitter (15) aus einer FeNi29Co18-Legierung hergestellt ist.

## Claims

1. A plane detector (1) for a gamma ray burst imager, the detector comprising a multilayer interconnection circuit (4) between external connectors (6a, 6b) and a processor circuit (5) fastened on a rear face (4b) of the circuit (4) and a detection module fastened on a front face (4a) of the circuit (4), the detection module including a support (3) having a rear face (3b) fastened to the circuit (4) and a front face (3a) on which sensors (2) are fastened, and a high voltage electrical connection device (20) having a through portion passing through the support (3), the detector being **characterized in that** the electrical connection device (20) extends between two adjacent sensors (2) in order to connect a connection pad of the circuit to a conductive grid (15) that extends at least in part between the sensors (2) and that is electrically connected to a free face of each sensor (2).

2. A detector according to claim 1, wherein the through portion of the electrical connection device (20) includes a conductor wire (21) having, between two bare end portions (21a, 21b), a central portion that is covered in an insulating sheath (23) in order to insulate it electrically from the support (3).

3. A detector according to claim 2, wherein the conductor wire (21) is made of aluminum.

4. A detector according to any one of claims 1 to 3, wherein the grid (15) comprises connection pads (16) arranged to cover corners of four adjacent sensors (2).

5. A detector according to any one of claims 1 to 3, wherein the voltage applied to the sensors (2) lies in the range -400 V to -800 V.

6. A detector according to any one of claims 1 to 5, wherein the components are assembled together by adhesive.

7. A detector according to claim 6, wherein the adhesive used is of the epoxy and silver type.

8. A detector according to any one of claims 1 to 7, wherein the sensors (2) are made of cadmium telluride.

9. A detector according to any one of claims 1 to 8, wherein the conductive grid (15) is made of an FeNi29Co18 alloy.
